# EUROPEAN PATENT SPECIFICATION

(11) **EP 3 766 663 B1**
(45) Date of publication and mention of the grant of the patent: **23.08.2023**
(21) Application number: 19186847.0
(22) Date of filing: 17.07.2019
(51) Int. Cl.: B29C 53/20, B29C 57/10, B29C 65/00, B29C 67/00, B65B 7/14, B65B 51/30, F16L 55/10, A61M 39/08, B29L 23/00, B23D 21/00, B29C 65/56, B29C 65/74

(54) **FLUID-TIGHT SEPARATING CLOSURE**
FLUIDDICHTER TRENNVERSCHLUSS
FERMETURE DE SÉPARATION ÉTANCHE AUX FLUIDES

(43) Date of publication of application: 20.01.2021
(73) Proprietor: Sartorius Stedim North America Inc., Bohemia, NY 11716 (US)
(72) Inventor: Weger, Dietmar, 39030 Terenten (IT); Böttcher, Lars, 34212 Melsungen (DE); Neuhaus, Jan, 37127 Dransfeld (DE); Zumbrum, Michael, New Oxford, 17350 Pennsylvania (US)
(74) Representative: Vigand, Philippe

(56) References cited:
- EP-A1- 3 026 319
- WO-A2-2010/008396
- DE-A1-102015 106 623
- US-B2- 8 910 918
- US-E- R E41 169

## Description

### Technical field

The subject matter of the invention relates to a method and a device for forming a fluid-tight separating closure of a conduit with a sleeve surrounding the conduit.

In the production and processing of various products it is often necessary to remove a fluid from a closed process system or to add it to the system. The fluid may be, for example, a liquid. Such a need exists, for example, in the production and processing of biopharmaceuticals, pharmaceuticals, or other biotechnology applications during which a production process is carried out in process tanks. Such a need may also exist, for example, in the production of food, paints or chemicals, to name only a few. The problem with the transfer of a fluid is the need for the adding or removal of the fluid to be done in an aseptic, hygienic, and/or sterile manner.

### Prior art

From WO 2010/008396 A2 there is known a flexible conduit, comprising a plastically deformable sleeve. The plastically deformable sleeve surrounds the conduit. The conduit may be a tube or a hose. By a pressure exerted on the sleeve, the sleeve and the hose or the conduit are deformed in order to seal off the conduit, while by applying further pressure to the sleeve, the sleeve and the conduit are severed, the conduit being substantially fluid-tight in the compressed region. The compressing and the separating of the sleeve and the conduit are done at the same time.

From the document US RE 41,169 E there is known a hand tool which is used to form a fluid-tight separating closure of a conduit with a sleeve surrounding the conduit. The hand tool has two oppositely situated jaws, between which the conduit with the sleeve is positioned. A first tool jaw has a cutting tool, which is oriented in the direction of the opposite second tool jaw. Webs are provided on either side of the cutting tool. If the tool jaws are moved toward each other, the sleeve and the hose will be sliced and compressed. A comparable design of a hand tool is known from the document US 2008/0149503 A1.

The concept known from these documents is transferred to an electrohydraulic tool, as is known from DE 10 2015 106 623 A1.

Starting from this prior art, the problem which the present invention proposes to solve is to indicate a method as well as a device for the forming of a fluid-tight separating closure of a conduit with a sleeve surrounding the conduit, by which an increased process safety can be accomplished.

### Presentation of the invention

This problem is solved by a method for forming a fluid-tight separating closure of a conduit with a sleeve surrounding the conduit according to claim 1 and by a device with the features of claim 7.

Advantageous embodiments and modifications of the method and the device are the subject matter of the dependent claims.

According to the method of the invention, it is proposed that a conduit with a sleeve surrounding the conduit is provided and positioned in a closure unit having a die and a stamp. The sleeve is compressed by a relative movement between the die and the stamp in order to form a closure. The closure is severed in a compressed region by a relative movement between the closure unit and a separating unit.

Thanks to this method according to the invention, a better process safety is achieved, since a severing of the closure in a compressed region substantially only occurs when a substantially fluid-tight separating closure has already been achieved. Therefore, no germs, particles, etc., can be introduced by the separating unit into the conduit during the severing. On the other hand, a contamination of the surroundings by a fluid escaping from the conduit is prevented, since the fluid located in the conduit is forced out of the compressed region and from the closure by the compressing, which occurs substantially prior to the severing

A severing of the closure in the compressed region occurs preferably by cutting or punching. Severing by means of a cutting process has the advantage that no waste products are produced. If the conduit and the sleeve surrounding the conduit are bodies of relatively large diameter, it is advantageous, but not necessary, to perform the severing by punching. If the severing of the closure is done in a compressed region by punching, it is advantageous for the stamped part produced by punching to be taken to a catching container.

According to an advantageous embodiment of the method according to the invention, it is proposed that the separating unit is stationary and the closure unit can move back and forth in and against a direction towards the separating unit. Such a configuration of the method requires less sophisticated equipment.

In order to achieve a reproducible closure or, in other words, a reproducible plastic deformation of the sleeve, it is proposed according to another advantageous embodiment that the closure unit is stationary during the pressing process and is released upon reaching a predetermined pressing force or quantity proportional to the pressing force. This has the benefit that a severing of the closure can only be done when the compressing process as such is substantially completed.

According to another aspect of the invention a device for forming a fluid-tight separating closure of a conduit with a sleeve surrounding the conduit is proposed, wherein the device comprises a closure unit with a die and a stamp. The die and the stamp can be moved relative to each other in order to form a closure. The device further comprises a separating unit, which is suited and designed to accomplish a severing of the closure in a compressed region. The closure unit and the separating unit of the device are adapted so that these, the closure unit and the separating unit, can move relative to each other. This, in particular, distinguishes the invention from the previously known concepts.

A severing of the closure in a compressed region can be done by means of a knife, contained in the separating unit. Alternatively, the separating unit may comprise a punching stamp.

It has proven to be especially advantageous for the knife or the punching stamp to be designed such that a convex cutting portion is provided between two cutting regions arranged substantially in a V-shape. During a severing of the closure in the compressed region, at first the convex cutting portion is active. After the convex cutting portion has penetrated at least partly into the compressed region, the two cutting portions arranged substantially in a V shape act on the compressed region. Thus, webs are produced in the compressed region during the separating process, which are then also severed. One benefit of such a configuration of the knife or the punching stamp is that, after the forming of the closure, the conduit with the partly deformed sleeve is under a tension. If the conduit with the sleeve is severed by means of the advantageously configured knife or punching stamp, the severed end regions are substantially prevented from jumping or shooting away.

According to another advantageous embodiment of the device according to the invention, it is proposed that the separating unit is stationary. Preferably, the closure unit has a guide means for guiding the separating unit during a severing of the closure in a compressed region. If the separating unit is a knife or a punching stamp having a relatively slight thickness, an increased stability of the separating unit will be achieved. In particular, the buckling resistance will be increased.

According to yet another advantageous embodiment of the device, it is proposed that a release unit is provided, which is designed such that the closure unit is stationary during the forming of the closure and the release unit releases the closure unit upon reaching a predetermined pressing force or quantity proportional to the pressing force.

Further benefits and details of the method and the device will be explained with the aid of the exemplary embodiments presented in the drawings, without the subject matter of the invention being limited to these exemplary embodiments.

### Brief description of the figures

- Fig. 1:: schematically shows perspective view of a first exemplary embodiment of a device for forming a fluid-tight separating closure.
- Fig. 2: schematically shows a detail view of a separating unit as well as a release unit of the device of Fig. 1.
- Fig. 3: schematically shows a stamp in a front view.
- Fig. 4:: shows the stamp of Fig. 3 in a side view.
- Fig. 5:: shows an embodiment of a punching stamp.
- Fig. 6:: shows a conduit with a sleeve and a closure.
- Fig. 7:: shows a conduit with a sleeve in a side view.
- Fig. 8-10:: schematically show a separation process in the compressed region of the closure.
- Fig. 11:: shows a force vs. time diagram.
- Fig. 12:: schematically shows a die and a stamp of a closure unit in a front view.
- Fig. 13:: shows the die and the stamp of Fig. 12 in a side view.
- Fig. 14:: shows another exemplary embodiment of a die and a stamp in a front view.
- Fig. 15:: shows an operating head of an electrohydraulic apparatus.

### Detailed description

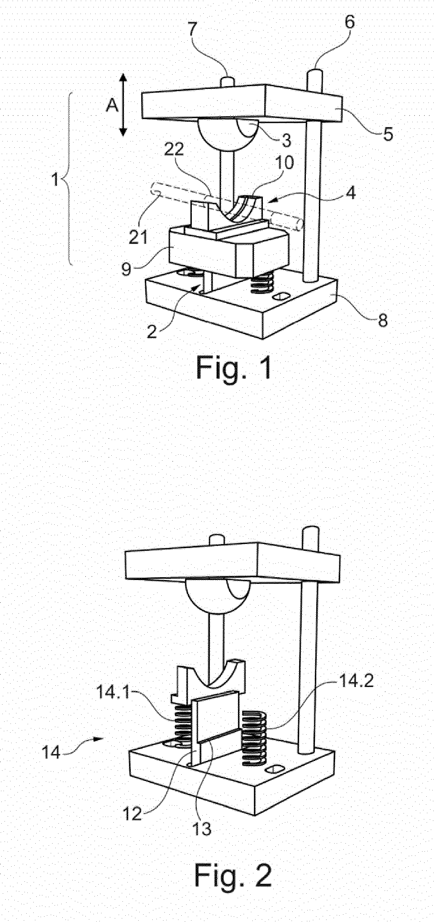

Fig. 1 shows in a perspective view an exemplary embodiment of a device for forming a fluid-tight separating closure of a conduit 21 with a sleeve 22 surrounding the conduit 21. The conduit 21 as well as the sleeve 22 are indicated by broken lines in Fig. 1.

The device comprises a closure unit 1. The closure unit 1 is formed by a stamp 3 and a die 4. The stamp 3 in the shown exemplary embodiment is arranged on a carrier plate 5. The carrier plate can be moved as indicated by an arrow labled "A". The carrier plate 5 is led in guides 6, 7. The guides 6, 7 are joined to a base plate 8.

The die 4 is arranged on an intermediate plate 9. In the shown exemplary embodiment, the die 4 comprises a substantially V-shaped receiving area, which is suitable and designed for receiving and positioning the conduit 21 with the sleeve 22. The receiving area may comprise several portions, which are configured so that a positioning of conduits with sleeves having different diameters is possible. In the shown exemplary embodiment, the die 4 is configured in a two-piece manner. The die 4 has a slot 10. The die 4 in the shown exemplary embodiment is positioned stationary on the intermediate plate 9.

The device comprises a separating unit 2. The separating unit 2 is designed in the form of a punching stamp 12 that can be seen in Fig. 2. The punching stamp 12 is connected to the base plate 8 in a fixed manner.

It can be seen from Fig. 2 that the punching stamp 12 protrudes partially into the slot 10 of the die 4. The slot 10 is preferably configured so that it forms at least in part a guide for the punching stamp 12 in the die 4. The intermediate plate 9 has an opening (not shown) which extends through the punching stamp 12.

It can be seen from Fig. 2 that the punching stamp 12 has a shoulder 13 on each of the opposite sides. The shoulders 13 form end stops for the intermediate plate 9.

The device for the forming of a fluid-tight separating closure furthermore comprises a release unit 14. The release unit 14 in the shown exemplary embodiment is formed by two compression springs 14.1 and 14.2. The springs 14.1 and 14.2 are arranged between the base plate 8 and the intermediate plate 9.

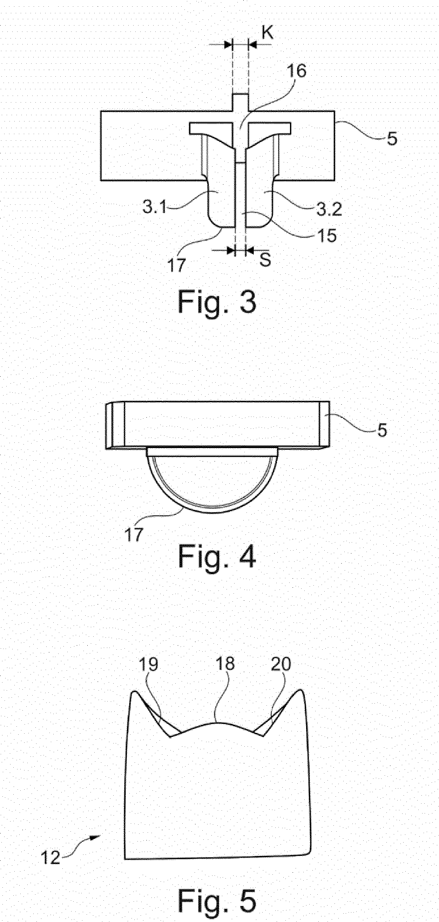

Fig. 3 and 4 show an exemplary embodiment of a stamp 3. The stamp 3 in the shown exemplary embodiment is configured in a two-piece manner. It comprises a first stamp portion 3.1 and a second stamp portion 3.2. The stamp portions 3.1 and 3.2 are arranged with a spacing S to form a gap 15 on the carrier plate 5. In a region adjacent to the carrier plate 5 there is provided a widening of the gap 15. This widening forms a channel 16 which runs transversely to the longitudinal direction or the direction of movement of the stamp 3. The channel 16 may also be widened in part by a corresponding configuration of the carrier plate 5.

The stamp 3 has a spherically shaped end face 17. Preferably, the end face 17 is fashioned in the form of a spherical segment. The geometry or shape of the stamp 3 and the end face 17 may be adapted to the geometry of the conduit and the sleeve. The adapting can also be done when different materials are used for the sleeve.

Fig. 5 shows an exemplary embodiment of a punching stamp 12. The punching stamp 12 has a convex portion 18. On either side of the convex portion 18 there is provided an inclined region 19, 20. The imaginary prolongations of the regions 19, 20 intersect beneath the convex portion 18, so that the inclined regions 19, 20 form an imaginary V-shaped arrangement.

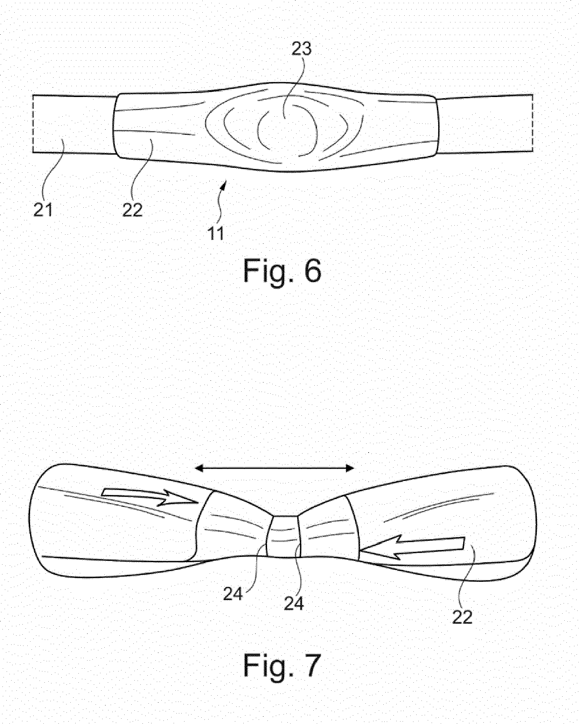

Fig. 6 shows a conduit 21 with a sleeve 22, wherein a closure 11 is formed. The conduit 21 is preferably a flexible conduit, such as a conduit made of silicone. The sleeve 22 consists of a plastically deformable material. This may be, for example, aluminium, preferably anodized aluminium. It can be seen from Fig. 6 that the sleeve 22 has a compressing region 23.

In order to form such a compressing 23, which produces a fluid-tight closure 11 of the conduit 21, the conduit 21 with the sleeve 22 is positioned onto the die 4, as indicated by broken lines in Fig. 1. The carrier plate 5 is connected to a drive unit (not shown) by means of which the carrier plate 5 with the stamp 3 is moved towards the die 4. The drive unit is connected to a corresponding frame (not shown). Preferably, the drive unit is an electrically, electrohydraulically or pneumatically operated drive unit.

By means of the stamp 3, a force is exerted onto the sleeve 22, resulting in a plastic deformation of the sleeve 22. The release unit 14 and, in particular, the springs 14.1 and 14.2 are dimensioned such that the die 4 and the intermediate plate 9 are substantially stationary during the compressing. A certain contact may be established between the sleeve 22 and the punching stamp 12, but such contact does not result in an actual severing of the closure in the compressed region 23. This is illustrated, for example, in Fig. 7. The region situated opposite the compressed region 23 can be seen in Fig. 7. Here, one can see that the sleeve 22 was in contact with the punching stamp 12, which is manifested at edges 24. A contact between the punching stamp 12 and the sleeve 22 may sometimes be desirable, if a better outcome in regard to a fluid-tight closure is accomplished by the contact during the compressing process.

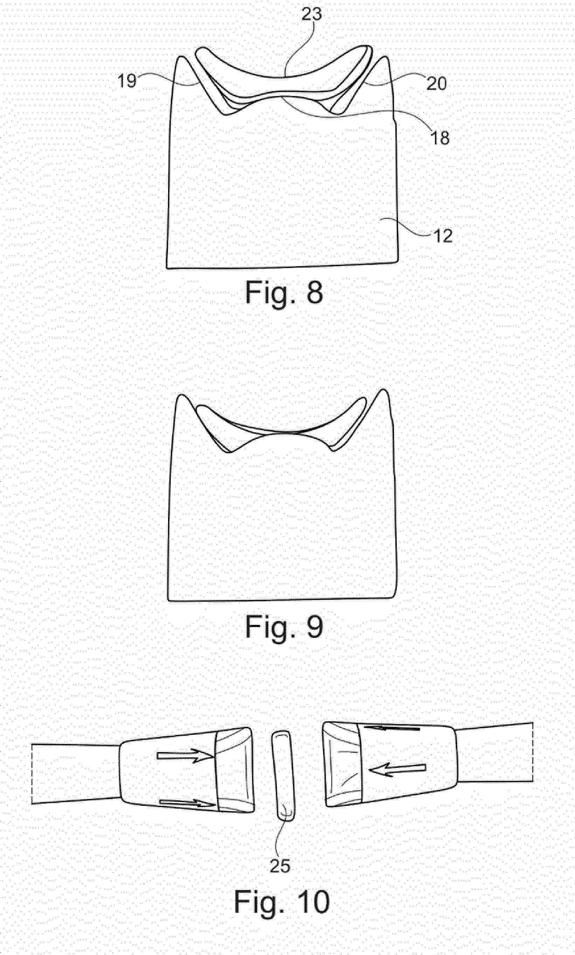

If the force exerted onto the die 4 by the stamp 3 is increased by means of the drive unit (not shown), the closure unit 1 comprising the die 4 and the stamp 3 will move towards the base plate 8. The punching stamp 12 is guided in the die 4 and a severing of the closure 11 occurs in the compressed region 23, as illustrated in Fig. 8 and 9.

The convex portion 18 of the punching stamp 12 severs a middle region of the compressed region 23. By a further movement of the closure unit 1, the side regions 19, 20 of the punching stamp 12 act on the compressed region 23, while the side regions 19, 20 only bring about a complete severing of the closure when the compressed region 23 has already been severed by the convex portion 18, as indicated in Fig. 9.

During this process, the punching stamp 12 arrives in the gap 15 of the stamp 3. If the compressed region 23 has been severed, this results in a stamped part 25, as shown in Fig. 10. The stamped part 25 is removed via the channel 16 and preferably caught in a catching container.

Instead of a punching stamp 12 it is also possible to provide a knife, which severs the compressed region 23.

The configuration of the punching stamp 12, which is shown in Fig. 5 as well as in Fig. 8 and 9, has the advantage that it dissipates the tension created in the conduit 21 and in the sleeve 22 in an advantageous manner in order to avoid a jumping away of the ends of the conduit 21.

The device therefore comprises a closure unit 1 with a die 4 and a stamp 3. In the shown exemplary embodiment, the die 4 is substantially stationary during a compressing of the sleeve 22, while the stamp 3 is designed to be movable. The possibility also exists of having the stamp 3 be stationary, while the die 4 is designed to be movable, so that a compressing process is carried out. In other words, the closure unit 1 may be designed so that thanks to a relative movement between the die 4 and the stamp 3 a compressing of the sleeve 22 and the conduit 21 to form a closure 11 takes place. For the severing of the closure 11 in the compressed region 23, the closure unit 1 and the separating unit 2 are moved. The punching stamp 12 is stationary in this process. The possibility also exists for the closure unit 1 to be stationary after the compressing, while the punching stamp 12 is moved for the severing of the closure 11 in the compressed region 23. In other words, a severing of the closure 11 in the compressed region 23 may also occur by a relative movement between the closure unit 1 and the separating unit 2.

In the specific exemplary embodiment, the release unit 14 is realized by springs 14.1, 14.2. Two springs 14.1 and 14.2 are shown, without the subject matter being confined to these two springs. The number of springs may vary. Instead of springs also hydraulically or pneumatically operated dampers or the like can be used, by which the die 4 is held substantially stationary during the compressing.

The device represented in Fig. 1 may be a stationary device. It is also possible that the device represented in Fig. 1 is designed as a hand tool, for example, as an electric motor operated tool or as an electrohydraulically operated tool. If the tool is an electrohydraulic tool, the stamp 3 may be connected directly to the piston of the electrohydraulic tool. The base plate 8 can be one leg of a C-shaped head of the tool. The separating unit 2 and the release unit 14 may be formed as a single structural unit in this case.

Preferably, the device, especially if configured as a hand tool, is equipped with a detection device, by means of which it is detected when a fluid-tight separating closure of a conduit 21 with a sleeve 22 surrounding the conduit 21 has been achieved. This detection device may be designed, for example, as a displacement transducer. Alternatively or additionally, it is possible to provide corresponding hydraulic components which, upon reaching a maximum pressure, terminate the further movement of the closure unit.

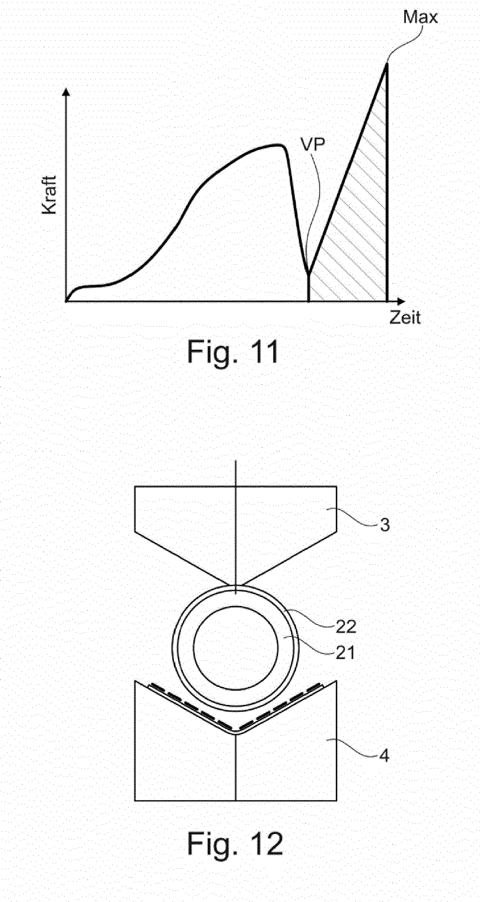

The device may be an electrohydraulically operated device. In an electrohydraulic device or tool, a pressure is generated in a chamber with a piston by means of an electrically operated pump. The piston, which is connected directly or indirectly to the stamp, transmits the force needed for the compressing and separating to the stamp. Fig. 11 shows a curve of the force plotted against time during the formation of a fluid-tight separating closure. It is evident from the time curve that the force needed for the compressing increases. Upon complete compressing, the force decreases. By detecting the compressing at time VP, it is no longer necessary to operate the device up to reaching a maximum pressure, resulting in a longer service life of the device. If the device is an electrohydraulically operated device, where the necessary power is provided by a storage battery, several cycles or compressing processes can be performed with such a device, since the power consumption is limited to what is needed. On the one hand, the service life of the device is increased, and on the other hand the compressing time or cycle time in which not only the compressing process but also the separation process occurs is shortened.

Fig. 12 shows a die 4 and a stamp 3 of a device. Between the die 4 and the stamp 3 there is shown a conduit 21 with a sleeve 22. The die 4 is substantially V-shaped in configuration. The stamp 3 has a wedge shape, adapted to the die 4. Broken lines indicate the situation in Fig. 12 in which the conduit 21 is compressed with the sleeve 22.

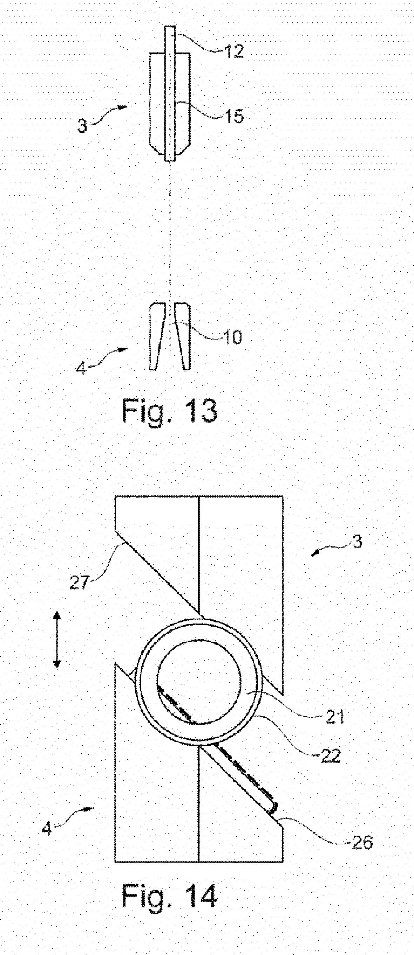

The die 4 has a slot 10, which is represented in Fig. 13. The stamp 3 has a gap 15, in which a punching stamp 12 is guided. In order to form a closure, the stamp 3 travels towards the die 4, so that a sufficiently large plastic deformation of the sleeve 22 is achieved. After this, the punching stamp 12 is moved, performing a severing of the closure 11 in the compressed region 23 in conjunction with the die 4. The stamped part 25 produced by the separation, which is not shown, can be taken away via the lower region of the die 4. For this, the die 4 has a corresponding enlargement.

In order to reduce the force needed for a compressing process, the die 4 has a surface 26 that is inclined with respect to the horizontal. The stamp 3 has a surface 27 running parallel to the surface 26. The die 4 and the stamp 3 are movable with respect to each other. By moving the surfaces 26, 27 toward each other, the sleeve 22 with the conduit 21 is compressed, and its end state is shown by broken lines in Fig. 14. For clarity, a punching stamp and the further components of the device are not shown. The die 4 and the stamp 3 shown in Fig. 14 may be used, for example, in a device as represented in Fig. 1.

Thanks to the device according to the invention, the formation of a fluid-tight separating closure of a conduit is accomplished. Because the closure is produced prior to the separation of the closure, an aseptic closure is achieved, since the inner space of the conduit is already closed in the region of the closure, before a separation process is performed. Hence, no germs, no abrasions, etc. can get into the conduit. Such a device is not only suited for the forming of an aseptic fluid-tight separating closure, but also in other areas where a fluid-tight separating closure of a conduit is desired.

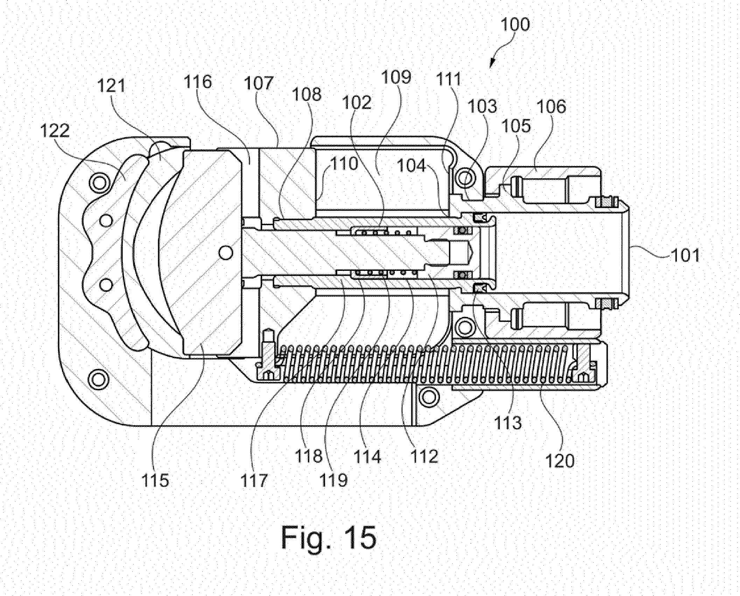

Fig. 15 shows an operating head 100 of an electrohydraulic apparatus which is suitable, and intended, in particular for single-handed operation. The operating head 100 has a cylinder 101, which is connected to the operating head in a fixed position. A piston 102 can be moved within the cylinder 101. The cylinder 101 has an opening 104, which is delimited by a collar 103. The piston 102 extends through the opening 104. On its end portion, which projects into the cylinder 101, the piston 102 has a seal 105, by means of which the piston 102 is sealed in relation to the cylinder 101. The seal 105 is a radial shaft seal, which is supported on an encircling flange 106.

In the position illustrated in Fig. 15 the flange 106 butts against the collar 103, and this therefore delimits the travel path of the piston 102.

The free end region of the piston 102, that is to say the region which is located opposite the region located in the cylinder 101, is connected to a stamp 107 directly or indirectly. The stamp 107 is connected to the end region 108 preferably in a releasable manner.

The operating head 100 has guide means (not illustrated specifically) for the purpose of guiding the stamp 107. The guide means can be, for example, a tongue/groove guide. It is also possible for the operating head 100 to have an accommodating space 109, into which the stamp 107 can be introduced at least to some extent. However, in the operating state of the operating head 100, the stamp 107 cannot be moved out of the accommodating space 109. Preferably the maximum displacement path of the piston 102 is dimensioned correspondingly for this purpose. The distance between the rear side of the stamp 107 and the side surface 111 of the accommodating space 109, said surface running essentially parallel to the rear side 110, is greater than the maximum possible displacement path of the piston 102.

The piston 102 is designed in the form of a hollow cylinder. The piston 102 contains a piston 112, which can be moved in an axial direction of the piston 102. The piston 112 has seals 113, which serve for sealing purposes. Thus, a hydraulic fluid cannot flow through the hollow-cylindrical piston 102.

A rod 114 is connected to the piston 112. That end portion of the rod 114 which is located opposite the piston 112 is connected to a cutting tool 115. The cutting tool 115 can be displaced in the axial direction within the stamp 107. For this purpose, the stamp 107 has a corresponding gap 116. The rod 114 and the inner end region 108 of the piston 102 are designed such that the rod 114 is guided in the piston 102.

The piston 102 contains a shoulder 117, on which a bushing 118 is supported. A compression spring 119 is provided between the piston 112 and the periphery of the bushing 118 which is oriented towards the rod 114.

It can be seen from Fig. 15 that the stamp 107 is connected to a tension spring 120. The opposite end of the tension spring 120 is connected to the operating head 100 in a fixed position.

The stamp 107 and the cutting tool 115 form a moveable jaw. A two-part die 121 is arranged opposite the stamp 107. A spacer 122 is provided between the two parts of the die 121 and therefore the gap produced in the die 121 is sufficient for the cutting tool 115 to be able to project at least to some extent into said gap.

A pressure is generated within the cylinder 101 by means of an electrically operated hydraulic unit (not illustrated). The pressure in the cylinder 101 is sufficient to displace the piston 102 out of its starting position into the end position, which is illustrated in Fig. 15. The collar 103 here forms a stop for the flange 106. Until this end position is reached, the apparatus is designed preferably such that no movement or displacement of the piston 112 takes place. If a conduit with a sleeve (not illustrated) is located between the die 121 and the stamp 107, they are compressed with one another in a fluid-tight manner. When the piston 102 reaches its end position, as is illustrated in Fig. 15, then the pressure prevailing in the cylinder 101 acts on the piston 112. The piston 112 is displaced counter to the force of the compression spring 119, as a result of which the cutting tool 115, which is connected to the piston 112 by means of the rod 114, is introduced between the parts of the die 121 and therefore the fluid-tight closure (not illustrated) is severed.

The movement of the stamp 107 tensions the tension spring 120. The movement of the piston 112 compresses the compression spring 119. Once operation as such has been completed, the pressure in the cylinder 101 is reduced. The pressure is reduced to the extent where both the tension spring 120 and the compression spring 119 are relieved of stressing. This causes the piston 112 to be displaced into its starting position. In addition, the piston 102 is returned into its starting position as a result of the tension spring 120 being relieved of stressing. The movement of the piston 112 by the compression spring 119 also results in the cutting tool 115, which is connected to the piston 112 via the rod 114, being retracted into the stamp 107, and it is therefore preferably the case that the cutting tool 115, in its starting position, does not project out of the punch.

An electrohydraulically operating tool comprising the operating head illustrated in Fig. 15 is also suitable for compressing, and severing, a conduit with a sleeve of different diameters, this resulting in a fluid-tight separation closure of the conduit. It is possible here to use conduits of different diameters with sleeves of different diameters. The collar 103 and the flange 106 delimit the displacement path of the piston 102. This delimitation of the piston 102 and corresponding dimension of the stamp 107 can define a fluid-tight separation closure of a conduit for a lower limit of the conduit and of the sleeve.

It is not imperative for the piston 102 to be displaced as far as its end position, which is illustrated in Fig. 15, by a movement of the stamp 107 when the sleeve is being compressed. If a conduit with a relatively large sleeve is introduced between the stamp 107 and the die 121, corresponding control or regulation of the pressure in the cylinder 101 can nevertheless achieve compression and severing. If, for example, a conduit has a greater external diameter, and a greater wall thickness, than the possible minimum, and if the sleeve associated with this relatively large conduit also has a correspondingly great diameter and great wall thickness, then the pressure generated in the cylinder 101 is high enough to compress the sleeve between the die 121 and the stamp 107. In this case, the collar 103 does not come into abutment against the flange 106. If the piston 102 has reached a position between the starting position and the collar 103, which can be referred to as the end position for a certain conduit- and-sleeve configuration, then the piston 112 is subjected to the pressure acting in the cylinder 101, and so the piston 112, and therefore also the cutting tool 115, causes the closure to be severed. Irrespective of the movement of the piston 112, the pressure in the cylinder 101 is kept essentially constant.

The bushing 118 serves to avoid a collision between the cutting tool 115 and the spacer 122, or generally to delimit the displacement path of the piston 112.

The end periphery of the bushing 118 thus also serves as a stop for the piston 112.

If an electrohydraulic apparatus is used with the described operating head 100 for the forming of a fluid-tight separating closure of a conduit, the piston 102 with the stamp 107 and the die 121 can be considered parts of a closure unit. Within the closure unit, the die 121 and the stamp 107 can be moved relatively to each other. If a conduit with a sleeve is provided and positioned within the closure unit between the die 121 and the stamp 107, the sleeve can be compressed by such a relative movement between the die 121 and the stamp 107 in order to form a closure. The piston 112 with the cutting tool 115 can be considered part of a separating unit. By a relative movement between the closure unit and the separating unit the closure can be severed in a compressed region.

The closure unit comprising the piston 102 with the stamp 107 and the die 121 and the separating unit comprising the piston 112 with the cutting tool 115 can be considered parts of a device for forming a fluid-tight separating closure of a conduit with a sleeve surrounding the conduit. Thus, the above description of this device and of the corresponding method applies also to the operating head 100 of Fig. 15.

In the embodiment depicted in Fig. 13 severing can be performed by cutting. The cutting tool 115 is preferably a knife. Alternatively, instead of the cutting tool 115 a punching stamp could be used (not shown in the figures). In that case, severing can be performed by punching. A stamped part produced by punching is preferably taken to a catching container.

### List of reference numbers

- 1: Closure unit
- 2: Separating unit
- 3: Stamp
- 3.1: First stamp portion
- 3.2: Second stamp portion
- 4: Die
- 5: Carrier plate
- 6, 7: Guide
- 8: Base plate
- 9: Intermediate plate
- 10: Slot
- 11: Closure
- 12: Punching stamp
- 13: Shoulder
- 14: Release unit
- 14.1, 14.2: Spring
- 15: Gap
- 16: Channel
- 17: End face
- 18, 19, 20: Region (knife)
- 21: Conduit
- 22: Sleeve
- 23: Compressing region
- 24: Edge
- 25: Stamped part
- 26: Die surface
- 27: Stamp surface
- 100: operating head
- 101: cylinder
- 102: piston
- 103: collar
- 104: opening
- 105: seal
- 106: flange
- 107: punch
- 108: region
- 109: space
- 110: side
- 111: side surface
- 112: piston
- 113: seal
- 114: rod
- 115: tool
- 116: gap
- 117: shoulder
- 118: bushing
- 119: spring
- 120: spring
- 121: die
- 122: spacer

## Claims

1. Method for the forming of a fluid-tight separating closure of a conduit (21) involving the following steps:
- providing of a conduit (21) with a sleeve (22),
- positioning of the conduit (21) with the sleeve (22) in a closure unit (1) having a die (4) and a stamp (3)
- compressing of the sleeve (22) by a relative movement between the die (4) and the stamp (3) in order to form a closure (11);
- severing of the closure (11) in a compressed region (23) by a relative movement between the closure unit (1) and a separating unit (2).

2. Method according to Claim 1, wherein the severing is done by cutting.

3. Method according to Claim 1, wherein the severing is done by punching.

4. Method according to Claim 3, wherein a stamped part (25) produced by punching is taken to a catching container.

5. Method according to one of Claims 1 to 4, wherein the separating unit (2) is stationary and the closure unit (1) can move back and forth in and against a direction towards the separating unit (2).

6. Method according to one of Claims 1 to 5, wherein the closure unit (1) is stationary during the compressing and is released upon reaching a predetermined pressing force or quantity proportional to the pressing force.

7. Device for forming a fluid-tight separating closure of a conduit (21) with a sleeve (22) surrounding the conduit (21), wherein the device comprises
- a closure unit (1) with a die (4) and a stamp (3), wherein the die (4) and the stamp (3) can be moved relative to each other in order to form a closure (11), **characterised by**
- a separating unit (2) for a severing of the closure (11) in a compressed region (23), wherein the closure unit (1) and the separating unit (2) can be moved relative to each other.

8. Device according to Claim 7, wherein the separating unit (2) comprises a knife or a punching stamp (12).

9. Device according to Claim 8, wherein the knife or the punching stamp (12) has a convex cutting portion (18) between two cutting regions (19, 20) arranged substantially in a V-shape.

10. Device according to Claim 8 or 9, wherein the separating unit (2) is arranged stationary and the closure unit (1), especially the die (4), has a guide means for guiding the knife or the punching stamp (12).

11. Device according to one of Claims 7 to 10, wherein a release unit (14) is provided, which is designed such that the closure unit (1) is stationary during the forming of the closure and the release unit (14) releases the closure unit (1) upon reaching a predetermined pressing force or quantity proportional to the pressing force.

## Patentansprüche

1. Verfahren zum Bilden eines fluiddichten Trennverschlusses einer Leitung (21) mit den folgenden Schritten:
- Bereitstellen einer Leitung (21) mit einer Hülle (22),
- Positionieren der Leitung (21) mit der Hülle (22) in einer Verschlusseinheit (1), die eine Matrize (4) und einen Stempel (3) aufweist
- Zusammendrücken der Hülle (22) durch eine relative Bewegung zwischen der Matrize (4) und dem Stempel (3), um einen Verschluss (11) zu bilden;
- Abtrennen des Verschlusses (11) in einem zusammengedrückten Bereich (23) durch eine relative Bewegung zwischen der Verschlusseinheit (1) und einer Trenneinheit (2).

2. Verfahren nach Anspruch 1, wobei das Abtrennen durch Schneiden erfolgt.

3. Verfahren nach Anspruch 1, wobei das Abtrennen durch Stanzen erfolgt.

4. Verfahren nach Anspruch 3, wobei ein gepresstes Teil (25), das durch Stanzen produziert wird, zu einem Auffangbehälter geführt wird.

5. Verfahren nach einem der Ansprüche 1 bis 4, wobei die Trenneinheit (2) stationär ist und sich die Verschlusseinheit (1) in und gegen eine Richtung zur Trenneinheit (2) vor und zurück bewegen kann.

6. Verfahren nach einem der Ansprüche 1 bis 5, wobei die Verschlusseinheit (1) während des Zusammendrückens stationär ist und freigegeben wird, nachdem eine vorbestimmte Druckkraft oder ein Anteil proportional zu der Druckkraft erreicht ist.

7. Vorrichtung zum Bilden eines fluiddichten Trennverschlusses einer Leitung (21) mit einer Hülle (22), die die Leitung (21) umgibt, wobei die Vorrichtung Folgendes umfasst
- eine Verschlusseinheit (1) mit einer Matrize (4) und einem Stempel (3), wobei die Matrize (4) und der Stempel (3) relativ zueinander bewegt werden können, um einen Verschluss (11) zu bilden, **gekennzeichnet durch**
- eine Trenneinheit (2) zum Abtrennen des Verschlusses (11) in einem zusammengedrückten Bereich (23), wobei die Verschlusseinheit (1) und die Trenneinheit (2) relativ zueinander bewegt werden können.

8. Vorrichtung nach Anspruch 7, wobei die Trenneinheit (2) ein Messer oder einen Stanzstempel (12) umfasst.

9. Vorrichtung nach Anspruch 8, wobei das Messer oder der Stanzstempel (12) einen konvexen Schneidabschnitt (18) zwischen zwei Schneidbereichen (19, 20), die im Wesentlichen in einer V-Form angeordnet sind, aufweist.

10. Vorrichtung nach Anspruch 8 oder 9, wobei die Trenneinheit (2) stationär angeordnet ist und die Verschlusseinheit (1), insbesondere die Matrize (4), ein Führungsmittel zum Führen des Messers oder des Stanzstempels (12) aufweist.

11. Vorrichtung nach einem der Ansprüche 7 bis 10, wobei eine Freigabeeinheit (14) bereitgestellt ist, die derart konstruiert ist, dass die Verschlusseinheit (1) während des Bildens des Verschlusses stationär ist, und die Freigabeeinheit (14) die Verschlusseinheit (1) freigibt, nachdem eine vorbestimmte Druckkraft oder ein Anteil proportional zu der Druckkraft erreicht ist.

## Revendications

1. Procédé pour la formation d'une fermeture de séparation étanche aux fluides d'un conduit (21) impliquant les étapes consistant à :
- fournir un conduit (21) avec un manchon (22),
- positionner le conduit (21) avec le manchon (22) dans une unité de fermeture (1) ayant une matrice (4) et un poinçon (3),
- comprimer le manchon (22) grâce à un mouvement relatif entre la matrice (4) et le poinçon (3) afin de former une fermeture (11);
- séparer la fermeture (11) dans une région comprimée (23) par un mouvement relatif entre l'unité de fermeture (1) et une unité de séparation (2).

2. Procédé selon la revendication 1, dans lequel la séparation est réalisée par coupe.

3. Procédé selon la revendication 1, dans lequel la séparation est réalisée par poinçonnage.

4. Procédé selon la revendication 3, dans lequel une partie poinçonnée (25) produite par poinçonnage est transportée dans un conteneur de capture.

5. Procédé selon l'une des revendications 1 à 4, dans lequel l'unité de séparation (2) est fixe et l'unité de fermeture (1) peut se déplacer d'avant en arrière et contre une direction vers l'unité de séparation (2).

6. Procédé selon l'une des revendications 1 à 5, dans lequel l'unité de fermeture (1) est fixe pendant la compression et est libérée après avoir atteint une force de pression prédéterminée ou la quantité proportionnelle à la force de pression.

7. Dispositif pour former une fermeture de séparation étanche aux fluides d'un conduit (21) avec un manchon (22) entourant le conduit (21), dans lequel le dispositif comprend :
- une unité de fermeture (1) avec une matrice (4) et un poinçon (3), dans lequel la matrice (4) et le poinçon (3) peuvent être déplacés l'un par rapport à l'autre afin de former une fermeture (11), **caractérisé par** :
- une unité de séparation (2) pour une séparation de la fermeture (11) dans une région comprimée (23), dans lequel l'unité de fermeture (1) et l'unité de séparation (2) peuvent être déplacées l'une par rapport à l'autre.

8. Dispositif selon la revendication 7, dans lequel l'unité de séparation (2) comprend un couteau ou un emporte-pièce (12).

9. Dispositif selon la revendication 8, dans lequel le couteau ou l'emporte-pièce (12) a une partie de coupe convexe (18) entre deux régions de coupe (19, 20) agencées sensiblement en forme de V.

10. Dispositif selon la revendication 8 ou 9, dans lequel l'unité de séparation (2) est fixe et l'unité de fermeture (1), en particulier la matrice (4), a un moyen de guidage pour guider le couteau ou l'emporte-pièce (12).

11. Dispositif selon l'une des revendications 7 à 10, dans lequel on prévoit une unité de libération (14) qui est conçue de sorte que l'unité de fermeture (1) est fixe pendant la formation de la fermeture et l'unité de libération (14) libère l'unité de fermeture (1) après avoir atteint une force de pression prédéterminée ou la quantité proportionnelle à la force de pression.
